# EUROPEAN PATENT APPLICATION

(11) **EP 1 043 150 A2**
(43) Date of publication of application: **11.10.2000**
(21) Application number: 00107579.5
(22) Date of filing: 07.04.2000
(51) Int. Cl.: B32B 27/12, B32B 5/18, E04F 15/20

(54) **Underlayment for surface coverings and methods of making the same**

(30) Priority: 08.04.1999 US 288300
(71) Applicant: Mannington Mills, Inc., Salem New Jersey 08079-0030 (US)
(72) Inventor: Chen, Hao A., Chadds Ford, Pennsylvania 19317 (US); Zerebecki, Nicholas, Mullica Hill, New Jersey 08062 (US)
(74) Representative: Grünecker, Kinkeldey, Stockmair & Schwanhäusser Anwaltssozietät

(57) **Abstract**

An underlayment for surface covering, such as flooring, is described wherein the underlayment includes at least one polymeric foam layer having a top surface and a bottom surface and at least one felt layer located on either the top surface or bottom surface of the polymeric foam layer. Methods to reduce or control sound transmission and/or sound reflection of surface coverings like flooring products is also described wherein the underlayment is installed beneath the surface covering.

## Description

### BACKGROUND OF THE INVENTION

The present invention relates to a product for surface coverings and preferably a product for flooring products such as laminate flooring. More particularly, the present invention relates to an underlayment for use with surface coverings which preferably provide improved control of sound transmission.

It has always been the goal of manufacturers who develop hard floor surfaces such as laminate flooring and solid wood flooring to ensure that the sound transmission from foot traffic is held to acceptable levels. This concern has especially been prevalent with laminate flooring due to the core of the laminate flooring being made of particle board which has the ability to result in sound transmissions which are undesirable to many users. While laminate flooring has many benefits and has become a popular product in the United States based on many favorable properties, one of the weaknesses of laminate flooring in addition to the problem of moisture resistance, is that laminate flooring creates high sound transmission due to foot traffic on the hard top surface. Consumers have characterized the sound transmission as noisy, strong, and/or having sharp sounds. In response, manufacturers have installed sound absorption padding directly underneath the laminate flooring wherein the padding is capable of absorbing and dampening some of the sound to reduce the sound transmission. These paddings have been made in the past with wood fibers, which have been pressed together along with binder to form a rigid sheet or have been made of a polyurethane foam layer which is very expensive. The American Society for Testing and Materials (ASTM) has developed several tests to measure sound transmissions in a building and the two tests that are most relevant are ASTM E-792 and E-90 which relate to impact sound transmission through floor-ceiling assemblies and airborne sound transmission loss of building partitions, respectively. Each of these standard test methods for these measurements as set forth in the ASTM publications are incorporated in their entirety by reference herein.

While there have been attempted solutions to the sound transmission problems, there is plenty of room for improvement in developing a product which is economical and which provides acceptable sound transmission levels.

### SUMMARY OF THE PRESENT INVENTION

A feature of the present invention is an underlayment which preferably has improved impact sound transmission and/or airborne sound transmission when used as an underlayment for surface coverings such as flooring products.

An additional feature of the present invention is to provide an underlayment which is effective for controlling sound transmission and yet is economical.

Another feature of the present invention is to provide a method for reducing or controlling sound transmission in surface coverings like flooring products.

Additional features and advantages of the present invention will be set forth in part in the description which follows, and in part will be apparent from the description or may be learned by practice of the present invention. The objectives and other advantages of the present invention will be realized and obtained by means of the elements and combinations particularly pointed out in the written description and the pending claims.

To achieve these and other advantages and in accordance with the purpose of the present invention, as embodied and broadly described herein, the present invention relates to an underlayment which can be used for surface coverings, such as flooring products, like laminate flooring. The underlayment has at least two layers which forms the underlayment. In particular, a polymeric foam layer having a top surface and a bottom surface is located above or below a felt layer which has a top surface and a bottom surface. Preferably, the polymeric foam layer is a thermoplastic foam layer.

The present invention further relates to a surface covering which contains the surface covering and the underlayment of the present invention.

The present invention further relates to a method of reducing and/or controlling sound transmission in a surface covering by installing the underlayment of the present invention beneath the surface covering.

It is to be understood that both the forgoing general description and the following detailed description are exemplary and explanatory only and are intended to provide further explanation of the present invention, as claimed.

The accompanying drawings which are incorporated in and constitute a part of this specification, illustrate several embodiments of the present invention and together with the description serve to explain the principles of the present invention.

### BRIEF DESCRIPTION OF THE DRAWINGS

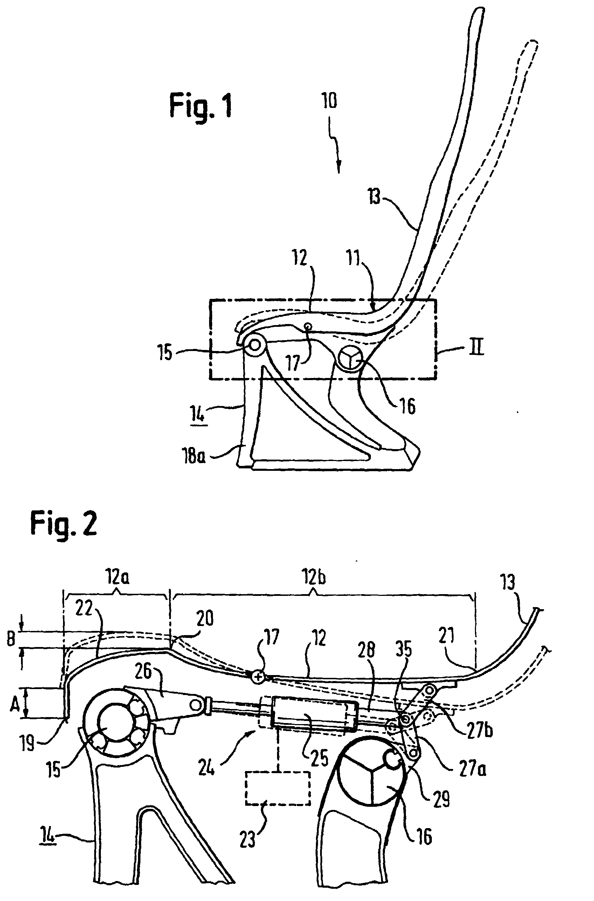

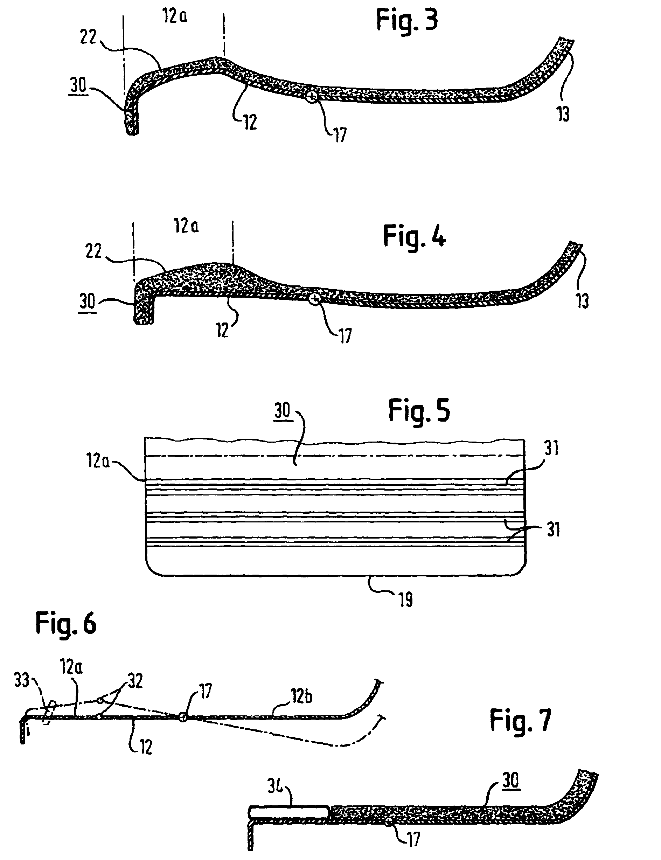

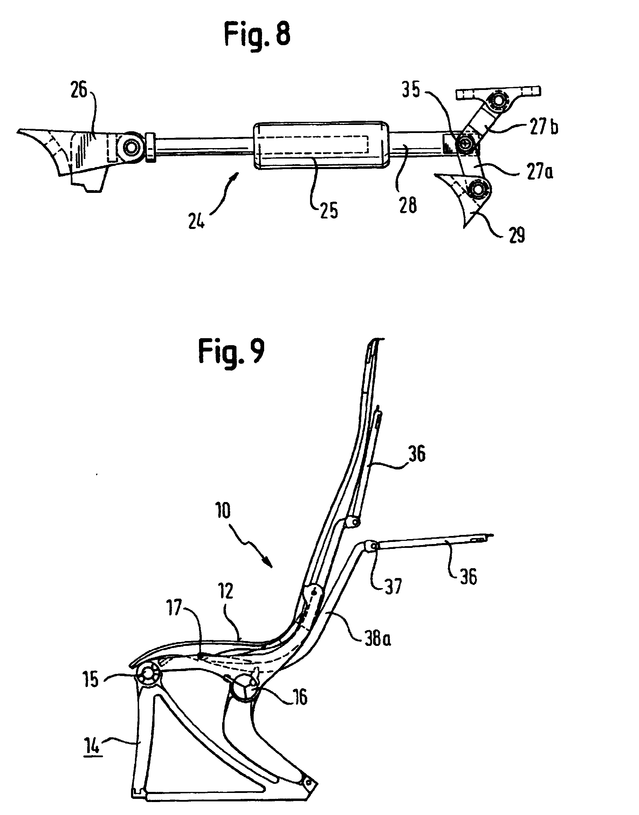

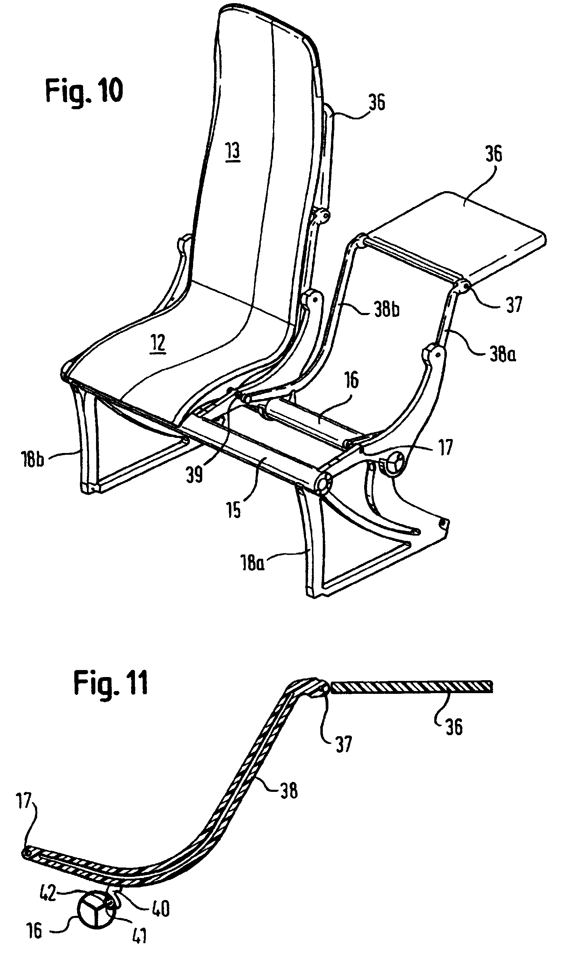

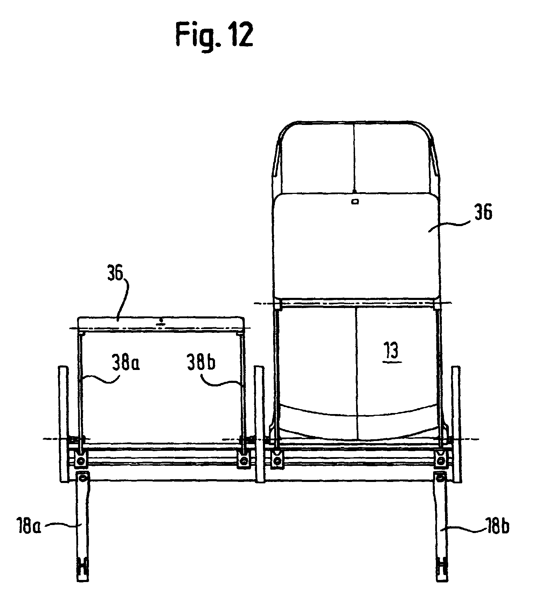

Figures 1 and 2 are enlarged side views of several embodiments of the underlayment of the present invention.

### DETAILED DESCRIPTION OF THE PRESENT INVENTION

The present invention relates to an underlayment for surface coverings. The underlayment is generally located underneath the surface covering. Preferably, the surface covering is a flooring product and more preferably is a laminate flooring product, such as a laminate plank or other form of laminate flooring product.

The underlayments of the present invention are preferably capable of controlling various forms of sound transmissions in a room when the underlayment is located underneath a surface covering. The sound transmission can be air borne sounds in the room or sounds originating from the surface covering itself. Preferably, the underlayment of the present invention when located under a surface covering has the ability to reduce the decibel level of the sound transmission. For instance, when a person is walking on top of a surface covering, the underlayment has the ability to reduce the sound made by the person walking on the surface covering and further reduces the sound transmitted to other floors or rooms. In addition, the underlayment of the present invention preferably has the ability to reduce the sound created from a source other than a surface covering when such sound is traveling to the surface covering. As mentioned above in the background, the present invention preferably has the ability to reduce impact sound transmissions and air borne sound transmissions as those terms are discussed earlier.

In more detail, the underlayment of the present invention has at least a two layer construction wherein at least one polymeric foam layer having a top surface and a bottom surface is located above or beneath a felt layer having a top surface and a bottom surface. In other words, the felt layer is located on either the top surface or bottom surface of the polymeric foam layer. Preferably, the felt layer is located below the polymeric foam layer (i.e., the felt layer is in contact with the floor or sub-floor and the polymeric layer is in contact with the surface covering.)

The polymeric foam layer is preferably a thermoplastic foam layer. Specific examples of thermoplastic materials which form the thermoplastic foam layer include, but are not limited to, at least one polymer selected from vinyl containing polymers such as polyvinyl chloride, polyvinylacetate, polyvinyl alcohol, vinyldiene resins and copolymers or other polymers thereof; polyurethanes; polyethylenes including low density polyethylenes and high density polyethylenes; styrenes including ABS and polystyrene; polypropylenes; EVA; and co-polymers of the above, or combinations thereof. Preferably, the polymeric foam layer is a polyvinyl chloride-type foam layer.

Preferably, the polymer is a vinyl containing polymer, and more preferably is a polyvinyl chloride grade polymer. The considerations that are taken into account in deciding upon the particular polymer are the desired physical properties, foam quality, and process limitations, including fusion characteristics and rheology. The blowing agent, which is discussed below, should decompose while the polymer is properly fused. Extender grades of polymers can also be used. For instance, extender grades of polyvinyl chloride can be used to lower viscosity and/or reduce the overall cost of the product. In many cases, there is no noticeable effect on foam quality with the use of such extended grades especially at low levels such as 10 to 20% by weight replacement. The particle size of the polymeric resins can be any size generally used in the formation of foam layers and preferably is from about 0.02 microns to about 2 microns. The molecular weight characterized by inherent viscosity is preferably in the range of from about 0.9 I.V. to 1.1 I.V. In plastisol formulations, it is very common to use more than one type of resin to obtain the best processing and physical properties. The proper resin combination includes different molecular weights and morphology structures of resin particles to produce the optimal viscosity of the plastisol, fusion conditions, and end product performance.

Along with the polymer in the foam layer is an activated blowing agent or foaming agent. Any conventional blowing agent can be used for purposes of the present invention, especially those blowing agents associated with flooring products. Examples of such blowing agents and activating agents include, but are not limited to, azodicarbonamide which is preferably used with polyvinyl chloride plastisol formulations. The particle size of the blowing agent is preferably from about 2 microns to about 15 microns, and more preferably from about 2 microns to about 5 microns. The activator that is used to activate the blowing agent can be conventional activators which are known to activate the particular blowing agent used. Examples include, but are not limited to, metal oxides, metal octoates, dibasic lead phthalate, and ethylene glycol. These types of activators will surpress the decomposition of the blowing agent and improve the physical properties of the finished products. The decomposition velocity and temperature of the blowing agent can be altered by adding inorganic salts such as Zn, Ba, Co, Cd, Ca, Sr and compounds thereof, and organic salts, such as ammonium salts, malic acid, fumaric acid, itaconic acid, and the like.

Besides the activated blowing agent and the polymers that are present in the polymeric foam layer, other ingredients which can be included include, but are not limited to, stabilizers, plasticizers, biocides, diluents, pigments, surfactants, fillers, and the like. Typical plasticizers include, but are not limited to, DINP, DIDP, DOP, BBP at the preferred usage levels of from about 45 to about 55 phr. Preferred fillers include, but are not limited to, calcium carbonates and the like, at a preferred usage level of about 30 phr.

The polymeric foam layer can be made by blending together the ingredients which form the polymeric foam layer and using any conventional equipment to form a wet layer on the felt layer to be discussed in more detail below. Then, the wet layer on the felt layer is subjected to elevated temperatures sufficient to decompose or activate the blowing agent and form the desired foam thickness.

While any amount of polymer and activated blowing agent can be present in the polymeric foam layer as long as a layer can be formed, preferably, the amount of polymer present in the polymeric foam layer is from about 40% to about 70%, and more preferably from about to 45% to about 65%, and most preferable from about 50% to about 60% by weight based on the total weight of the foam layer.

In addition, the amount of blowing agent present in the polymeric foam layer is dependent upon the density of the desired final product as well as the thickness of the desired product. Preferably, the amount of blowing agent with activator present in the polymeric foam layer is from about 0.5% to about 3.0%, more preferably from about 1.0% to about 2.5%, and most preferably from about 1.2% to about 2.0% by weight, based on the total weight of the foam layer. In addition, the amount of activating agent is an amount sufficient to activate substantially all of the blowing agent present in the polymeric foam layer.

While any thickness of the polymeric foam layer is practical as long as such a layer can be used underneath a surface covering, preferably, the thickness of the polymeric foam layer is from about 20 to about 120 mils, more preferably from about 40 to about 100 mils, and most preferably from about 60 to about 80 mils.

While the polymeric foam layer can have any density, preferably the polymeric foam layer has a density of from about 5 to about 35 lbs/ft³, more preferably from about 10 to about 30 lbs/ft³, and most preferably from about 15 to about 25 lbs/ft³.

With respect to the felt layer, the felt layer for purposes of the present invention is a felted or matted fiber sheet of overlapping intertwined filaments and/or fibers, usually of natural, synthetic, such as fiberglass or man-made cellulosic origin such as cotton or rayon, although many other forms of felted sheets, textile materials fabrics, or the like can be used. Preferably, the felt layer or backing felt layer is a cellulosic fiber sheet with a polymeric latex composition dispersed amongst the fiber to form a film. The felt can also include other ingredients such as calcium carbonate and talc and the like. The felt layers described in U.S. Patent Nos. 3,293,094 and 3,293,108 to Nairn et al, can be used and these patents are incorporated in their entirety by reference herein. Preferably, the polymeric latex which can be present is a styrenebutadiene rubber-type latex. Other polymeric latexes or emulsions include, but are not limited to, acrylic, polyvinyl acetate, polyvinyl alcohol, and the like.

Preferably, the thickness of the felt layer is from about 10 to about 35 mils, more preferably from about 15 to about 30 mils and, most preferably from about 20 to about 25 mils.

The felt layer and the polymeric foam layer can be affixed to each other by any means or can simply be placed on top of one another. The polymeric foam layer and the felt layer can be affixed by casting the polymeric foam layer onto the felt layer and then activating the blowing agent. The polymeric foam layer and the felt layer can alternatively be affixed together by use of an adhesive such as a hot-melt glue adhesive. Examples of such hot-melt glue adhesives include, but are not limited to, a urethane hot-melt glue, such as EVA.

Though other additional layers are not preferred, other layers are optional and can be used in association with the polymeric foam layer and the felt layer. In addition, more than one polymeric foam layer can be used which can be the same or different from the first polymeric foam layer and the same is also true with the felt layer wherein more than one felt layer which can be the same or different as the first felt layer can be used. The location of the additional polymeric foam layers and/or felt layers can be in any combination.

The underlayment of the present invention can be affixed to the substrate surface or sub-floor by any means such as laying down the underlayment. The pieces of the underlayment can be attached together such as with tape and preferably duct tape. Alternatively, the underlayment can be attached to the substrate or sub-floor by use of adhesives or tape having adhesive on both sides of the tape.

In one embodiment, the underlayment is not affixed to the surface covering in which it comes in contact with and as an option, the surface covering can simply be placed on top of the underlayment. As an alternative, the top surface of the underlayment can be affixed to the bottom surface of the surface covering by any means, such as adhesive or tape having adhesive on both sides. The polymeric foam layer can face the bottom surface of the surface covering or the polymeric foam layer can face the top surface of the substrate or sub-floor. Either placement of the underlayment can be used.

As shown in Figures 1 and 2, Figure 1 depicts a preferred embodiment of the present invention wherein a polymeric foam layer (2) is located beneath and is in contact with a surface covering (1). Located beneath the polymeric foam layer (2) is a felt layer (3) which is also in contact with a sub-floor or substrate (4). Similarly, Figure 2 shows another embodiment of the present invention which includes all of the components of the embodiment in Figure 1 but further has an additional layer which can be a felt layer or polymeric foam layer (5) located beneath and in contact with the felt layer (3) wherein layer (5) is then in contact with the sub-floor or substrate (4).

Preferably, when the underlayment is installed beneath a surface covering such as a laminate flooring product, the sound transmission is reduced compared to no underpadding being present and/or compared to other padding products that are available. As stated earlier, preferably the underlayment of the present invention provides improved reduced sound transmission with respect to sound transmission through floor-ceilings and with respect to airborne sound transmission. Generally, with the underlayment of the present invention, the sound transmission with respect to impact sound transmission as determined by ASTM E-492 is lower than a surface covering without an underpadding. Also, the underlayment of the present invention when used with a surface covering such as a laminate flooring product preferably has an airborne sound transmission as determined by ASTM E-90 that is lower than a surface covering without an underpadding.

The present invention will be further clarified by the following examples, which are intended to be purely exemplary of the present invention.

### EXAMPLES

### Example 1

A underlayment according to the present invention was made and tested for sound transmission properties. In particular, a backing felt layer having a relatively flat thickness of about 0.025 inch was obtained from, Cascades Lupel, wherein the felt layer was a cellulosic fiber material impregnated with styrenebutadiene resin latex, calcium carbonate. This felt layer was then coated uniformly to a wet thickness of from about 0.018 inch with a foamable PVC plastisol having the composition set forth below. The foamable PVC plastisol composition was then fined by placing the coated felt layer in a heated oven at a temperature of about 400°F for a period of about 1.5 minutes. This temperature was sufficient to decompose or activate the azodicarbonamide-blowing agent and form a foam thickness of about 0.06 inch.

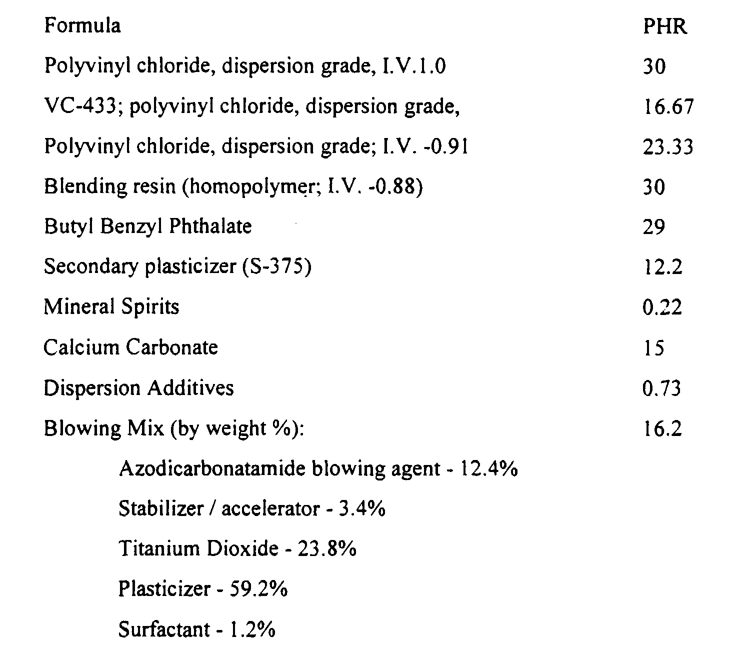

An independent laboratory conducted the impact sound transmission test, Interek Testing Services, located at 3933 U.S. Rt. 11, Cortland, NY 13045-0950. The specimen consisted of a 6 x 6 foot of Mannington laminate flooring on top of the underlayment. The specification of Mannington laminate flooring plank was as follows: thickness: 320 mils, weight: 1.5 lbs/ft²; density: 56 lbs/ft³, size of plank: 50.625" (L) x 7.625" (W). The test was according to American Society for Testing and Materials designation ASTM E-492-90. "Standard Test Method for Laboratory Measurement of Impact Sound Transmission Through Floor-Ceiling Assembles Using the Tapping Machine", and classified in accordance with ASTM-E-989-89, entitled, "Standard Classification for Determination of Impact Insulation Class (IIC)".

The method is designed to measure the impact sound transmission performance of a floor-ceiling assembly in a controlled laboratory environment. A standard tapping machine was placed at four positions on a six-inch concrete test floor that formed the horizontal specification between two rooms. One was directly above the other. The data obtained was normalized to reference room absorption of 10 square meters in accordance with the test method.

Impact Insulation Class (IIC) was obtained by matching a standard reference contour to the plotted normalized one-third octave band sound pressure levels at each test frequency. The greater the IIC rating, the lower the impact sound transmission through the floor-ceiling assembly. IIC is the rating used by architects, builders, and code authorities for acoustical purposes in building construction.

In addition, the underlayment was tested for sound-insulation performance with respect to the reduction of sound reflection. In this test, laminate flooring was installed on the surface of the underlayment and participants were asked to evaluate the sound reflection of the underlayment-containing floor with other commercially-available underlayments using the same laminate flooring on top. The number of participants was 120 and each of the participants agreed that the underpadding of the present invention had a lower sound reflection than the other two underpaddings tested which were Pergo's Wisperwalk and non-acoustical polyethylene foam.

The sound transmission as determined by ASTM E-492 showed that the underpadding of the present invention, when used with a laminate flooring over six inches of concrete, had a IIC level of 58 and with a floor assembly without ceiling had a IIC level of 48 which was comparable to all commercially-available underpaddings. The results of the testing as compared with other underpaddings using the same Mannington commercially available laminate are below.

| A. | Floor assembly without ceiling | Sound Transmission (IIC) |
|---|---|---|
| 1. | Invention (25 mils felt + 60 mils foam) over 6" concrete | 48 |
| 2. | Pergo WisperWalk over 6" concrete | 47 |
| 3. | SCI Ruggraber Sponge | 47 |
| 4. | Silencer P.U. foam over 6" concrete | 47 |
| 5. | Tredair Safe & Sound over 6" concrete | 56 |

| B. | Floor assembly with flooring/ceiling | |
|---|---|---|
| 1. | Invention (25 mils felt + 60 mils foam) over 6" concrete | 58 |
| 2. | Silencer P.U. foam over 6" concrete | 58 |
| 3. | Pergo WisperWalk over 6" concrete | 57 |
| 4. | Tredair Safe & Sound over 6" concrete | 58 |

Other embodiments of the present invention will be apparent to those skilled in the art from consideration of the specification and practice of the present invention disclosed herein. It is intended that this specification and examples be considered as exemplarity only, with a true scope and spirit of the present invention being indicated by the following claims.

## Claims

1. An underlayment comprising a polymeric foam layer having a top surface in contact with a surface covering and a bottom surface; and a felt layer having a top surface and a bottom surface, located below the bottom surface of said polymeric foam layer and said bottom surface is in contact with a sub-floor or substrate.

2. The underlayment of claim 1, wherein said polymeric foam layer is a thermoplastic foam layer.

3. The underlayment of claim 1, wherein the polymeric foam layer comprises an activated blowing agent selected from azodicarbonamide.

4. The underlayment of claim 1, wherein said polymeric foam layer comprises at least one vinyl containing polymer or co-polymer and at least one activated blowing agent.

5. The underlayment of claim 1, wherein said underlayment when installed beneath a laminate flooring has a higher refractive sound insulation compared to a surface covering with no underlayment.

6. A method to reduce or control sound reflection comprising the steps of installing the underlayment of claim 1 beneath a surface covering.

7. The method of claim 6, wherein said surface covering is a laminate flooring product.

8. A method to control or reduce the sound transmission of a flooring product comprising installing the underlayment of claim 1 beneath said flooring product.

9. The method of claim 8, wherein the sound transmission is impact sound transmission.

10. The method of claim 8, wherein said sound transmission is airborne sound transmission.
